# EUROPÄISCHE PATENTSCHRIFT

(11) **EP 4 479 234 B1**
(45) Veröffentlichungstag und Bekanntmachung des Hinweises auf die Patenterteilung: **04.02.2026**
(21) Anmeldenummer: 22839671.9
(22) Anmeldetag: 15.12.2022
(51) Int. Cl.: B29C 49/42, B29C 49/12, B29C 49/48, B29C 49/64, B29C 49/06, B29C 49/18, B29K 67/00, B29L 31/00

(54) **VERFAHREN UND VORRICHTUNG ZUR HERSTELLUNG VON BEHÄLTERN AUS VORFORMLINGEN**
METHOD AND APPARATUS FOR PRODUCING CONTAINERS FROM PREFORMS
PROCÉDÉ ET APPAREIL DE PRODUCTION DE RÉCIPIENTS À PARTIR DE PRÉFORMES

(30) Priorität: 16.02.2022 DE 102022103564
(43) Veröffentlichungstag der Anmeldung: 25.12.2024
(73) Patentinhaber: KHS GmbH, 44143 Dortmund (DE)
(72) Erfinder: HAESENDONCKX, Frank, 22145 Hamburg (DE); KLATT, Dieter, 22147 Hamburg (DE); JENZEN, Dieter, 25436 Tornesch (DE)
(74) Vertreter: Eisenführ Speiser
(86) Internationale Anmeldenummer: PCT/EP2022/086168
(87) Internationale Veröffentlichungsnummer: WO 2023/156046

(56) Entgegenhaltungen:
- EP-A1- 3 437 828
- DE-A1- 102011 057 112
- US-A- 4 790 741
- US-A1- 2015 166 211

## Beschreibung

Die vorliegende Erfindung betrifft eine Vorrichtung nach dem Oberbegriff des Anspruchs 1 und ein Verfahren nach dem Oberbegriff des Anspruchs 10.

Das Herstellen von Behältern aus Vorformlingen, insbesondere das Herstellen von Behältern aus Vorformlingen aus einem thermoplastischen Kunststoff, z.B. aus PET, ist hinlänglich im Stand der Technik bekannt. Der Vorformling wird hierzu in bekannter Weise zunächst in einer Heizvorrichtung auf die für eine Umformung erforderliche Temperatur gebracht, auch thermische Konditionierung genannt, und anschließend in eine Umformstation übergeben. In dieser Umformstation wird der Vorformling von innen mit einem Druckmedium beaufschlagt, z.B. von einem gasförmigen Druckmedium, z.B. von einem Blasgas wie Druckluft, oder von einem flüssigen Druckmedium, z.B. vom Füllgut, und dadurch gegen die Innenkontur einer mehrteiligen äußeren Form der Umformstation aufgeweitet. Bekannt sind auch hybride Verfahren und Vorrichtungen, bei denen aufeinanderfolgend eine Teilumformung unter Verwendung eines gasförmigen und Teilumformung unter Verwendung eines flüssigen Mediums erfolgt.

Unabhängig vom verwendeten Umformmedium wird die Umformung z.B. und mit Vorteil unterstützt von einer Reckstange, die von innen in den Vorformling hinein und gegen den Vorformlingsboden geführt wird, und die bei Weiterbewegung den Vorformling dann in dessen Längsrichtung reckt. Es werden dadurch Vorteile bei der Führung des Vorformlings und der sich daraus entwickelnden Behälterblase erreicht und eine hohe Übereinstimmung der erreichten Materialverteilung mit der gewünschten Materialverteilung, weil die Reckstange die Expansion in axialer Richtung bestimmt.

Jede Umformstation weist eine in aller Regel mehrteilig ausgebildete Form auf, damit diese in einen geöffneten und in einen geschlossenen Zustand gebracht werden kann. Im geöffneten Zustand lässt sich ein Vorformling in die Form einsetzen und nach erfolgter Umformung der entstandene Behälter wieder aus der Form entnehmen. Im geschlossenen Zustand umschließt die Form eine innere Kavität und der in der Form aufgenommene Vorformling kann gegen die geschlossene Form aufgeweitet werden.

Aus der DE 10 2009 019 008 A1 ist eine wie vorstehend beschriebene Vorrichtung bekannt, die zur Blasformung von Behältern dient. In dieser Schrift wird durch Blasdruckeinwirkung ein thermisch konditionierter Vorformling innerhalb einer mehrteiligen Blasform in den Behälter umgeformt.

Weiterhin lehrt die DE 100 63 795 A1 eine Vorrichtung zur Herstellung von Behältern durch Blasformen, wobei der Umformprozess in mehreren auf einem umlaufenden Umformrad angeordneten Blasstationen mit jeweils einer mehrteiligen Blasform stattfindet. In dieser Schrift sind Doppelstationen mit zwei Kavitäten gezeigt. Vorformlinge werden paarweise in die Doppelstation übergeben und paarweise werden die fertigen Behälter entnommen.

Es ist auch bekannt, dass die fertigen Behälter z.B. nach ihrer Herstellung weiteren Behandlungsschritten unterzogen werden. Hierzu sind z.B. einem Umformrad in Förderrichtung nachgelagert weitere Arbeitsräder angeordnet. Die Vorformlinge können ebenfalls vor ihrer Umformung Behandlungsschritten unterzogen werden, z.B. einer Sterilisierung. Hierzu sind z.B. einem Umformrad in Förderrichtung vorgelagert weitere Arbeitsräder angeordnet.

Es ist im Stand der Technik auch bekannt, dass aus Vorformlingen hergestellte Behälter zur Erhöhung ihrer Stabilität gegen Wärmeeinwirkung über eine ausgedehntere Zeitspanne auf einer höheren Temperatur gehalten werden. Eine solche erhöhte Stabilität gegen Wärmeeinwirkung ist z.B. erforderlich, wenn die Behälter mit einem heißen Füllgut befüllt werden sollen, in sogenannten Hofill-Verfahren. Es ist hierzu z.B. bekannt, dass die äußere Form, gegen die der Vorformling zu dem Behälter expandiert wird, auf erhöhter Temperatur gebracht ist, z.B. auf Temperaturen größer 80°C, und z.B. bis zu 160°C. Der Behälter wird nach Abschluss der Umformung über eine gewisse Zeit innerhalb der geschlossenen Form unter Beibehaltung eines Innendrucks, z.B. des zuletzt angewendeten Umformdruckes, gegen die heißen Formwände gehalten, sodass das Behältermaterial nachkristallisiert. Solche Verfahren werden auch als Heat-Set-Verfahren bezeichnet und die für die Umformung und die anschließende Stabilisierung des Behälters erforderliche Zeit ist höher als bei Umformverfahren, bei denen die Behälter keine besondere Wärmestabilität aufweisen müssen.

Zu solchen Heat-Set-Verfahren ist auch bekannt, dass dieses Verfahren auf zwei getrennten Arbeitsrädern durchgeführt wird. Auf einem ersten Arbeitsrad werden die Vorformlinge in ersten Umformstationen mit ersten mehrteiligen Formen in einen Zwischenbehälter umgeformt. Dieser Zwischenbehälter wird erneut aufgeheizt für die Einleitung eines Rückschrumpfprozesses. Danach werden die Zwischenbehälter auf ein zweites Arbeitsrad mit zweiten Umformstationen und zweiten Formen übergeben und ein zweiter Umformprozess durchgeführt, wobei die Formen der zweiten Umformstation auf einer erhöhten Temperatur größer 80°C gehalten sind. Aufgrund dieser erhöhten Temperatur kann ein thermischer Relaxationsprozess im Behältermaterial stattfinden. Nach Entnahme der Behälter aus den zweiten Umformstationen haben die Behälter ihre endgültige Form erhalten und können einer weiteren Verwendung zugeführt werden. Die US 4,790,741A offenbart Verfahren und Vorrichtungen für die blasformende Herstellung von Kunststoffbehältern aus Vorformlingen nach dem sogenannten Heat-Set-Verfahren.

Aus der DE 33 14 106 A1 ist beispielsweise eine Vorrichtung zum Herstellen von Hohlkörpern bekannt. Bei der Herstellung durchlaufen Vorformlinge aus einem thermoplastischen Kunststoff mittels einer Transportvorrichtung hintereinander eine Heizstrecke, eine Zwischenformstrecke, die mit den Vorformlingen mitbewegte zusätzliche Heizstrahler aufweist, und eine Umformstation. Es sollen insbesondere Behälter mit komplizierter Form hergestellt werden.

Eine Doppel- oder Mehrfachbehandlung von Vorformlingen ist aus der DE 103 40 916 A1 bekannt. Dabei sollen die Vorformlinge für die Realisierung einer aufeinanderfolgenden mehrfachen Durchführung eines vorgesehenen Behandlungsvorganges entweder in der Behandlungsstation belassen werden und mehrere Umläufe auf dem Arbeitsrad durchführen, oder nach einer Entnahme erneut der Behandlungsstation zugeführt werden. Bei den Behandlungen kann es sich z.B. um Beschichtungsvorgänge, insbesondere Plasmabeschichtungsvorgänge, um einen Verschlussvorgang oder einen Füllvorgang handeln. Erwähnt ist auch, dass eine solche doppelte oder mehrfache Behandlung für die Durchführung eines Anlaufvorganges oder für die Optimierung von Test- oder Abnahmebedingungen durchgeführt wird, um große Ausschussmengen an Vorformlingen zu vermeiden. Die US 2015/0166211 A1 zeigt Verfahren und Vorrichtungen zur blasformenden Herstellung von Kunststoffbehältern aus Vorformlingen, wobei die Umformung in mehreren Umformschritten erfolgt. Auch die EP 3 437 828 A1 beschreibt Verfahren und Vorrichtungen zur blasformenden Herstellung von Kunststoffbehältern mit mehreren Umformschritten.

Auf einem anderen technischen Bereich ist aus der DE 10 2011 057 112 A1 eine Vorrichtung zum Behandeln von Behältnissen bekannt, bei der die Behältnisse in einem ersten Umlauf befüllt und verschlossen und in einem zweiten Umlauf etikettiert werden. Ein Umformen von Werkstücken ist nicht vorgesehen.

Nachteilig an den bekannten Lösungen für Vorrichtungen und Verfahren zur Herstellung von Behältern aus Vorformlingen ist, dass diese entweder nicht ausreichend kompakt gebaut sind, z.B. weil für die Ausführung jedes Bearbeitungsschrittes ein eigenes Arbeitsrad vorgesehen ist, oder die Vorformlinge in einer kompakteren Bauweise der Vorrichtungen lediglich einen Behandlungsprozess durchlaufen können oder die Verweildauer auf dem Arbeitsrad verlängert ist, und dadurch nur ein geringerer Durchsatz pro Zeiteinheit verwirklicht werden kann. Dies gilt insbesondere für die Herstellung temperaturstabilisierter Behälter (Heat-Set-Verfahren) für sich anschließende Hotfill-Verfahren.

Der vorliegenden Erfindung liegt daher die Aufgabe zugrunde, verbesserte und kompaktere Vorrichtungen und Verfahren zur Umformung von Vorformlingen in Behälter bereitzustellen.

Erfindungsgemäß soll diese Aufgabe durch eine Vorrichtung mit den Merkmalen des Anspruchs 1 und durch ein Verfahren mit den Merkmalen des Anspruchs 10 gelöst werden. Weitere vorteilhafte Ausführungsformen sind in den Unteransprüchen angegeben.

Die nachfolgenden Erläuterungen zu erfindungsgemäßen Vorrichtungen betreffen in gleicher Weise erfindungsgemäße Verfahren und umgekehrt.

Die erfindungsgemäße Vorrichtung weist ein Umformrad auf, an welchem verschiedene Bearbeitungsstationen angeordnet sind. Dieses Umformrad kann z.B. ein Blasrad sein, wenn die Umformung z.B. unter Verwendung eines Blasgases erfolgt, z.B. unter Verwendung von Druckluft. Das erfindungsgemäße Verfahren bedient sich z.B. eines solchen Umformrades und weiterer nachfolgend zur erfindungsgemäßen Vorrichtung beschriebener Einrichtungen.

Es wird nachfolgend und in den Ansprüchen der Begriff "Werkstück" benutzt. Dieser Begriff wird verwendet sowohl für Vorformlinge, als auch für daraus durch Umformung entstehende Zwischenbehälter und auch für die nach einer weiteren Umformung endgültig entstehenden Behälter. Diese Werkstücke durchlaufen zur Umformung mehrere Umläufe auf dem Umformrad, wobei die Werkstücke während eines jeden Umlaufs eine Umformung erfahren und zwischen aufeinanderfolgenden Umläufen von einer ersten Bearbeitungsstation in eine zweite Bearbeitungsstation überführt werden.

Als Vorformling wird in üblicher Weise ein aus einem tempoplastischen Kunststoff z.B. in einem Spritzgussverfahren hergestellter Körper verstanden, der nachfolgend durch Umformung in eine endgültige Behälterform überführt werden soll. Entsprechend weist dieser Vorformling gegenüber dem fertig umgeformten Behälter ein deutlich kleineres Innenvolumen und deutlich kleinere Abmessungen auf, was den Transport und die Lagerung gegenüber fertiggestellten Behältern stark vereinfacht. In der Regel weist der Vorformling ein geschlossenes und ein offenes Ende auf. Am offenen Ende, dem Mündungsbereich, sieht der Vorformling in aller Regel bereits so aus, wie der endgültige Behälter aussehen soll. Er weist hierzu z.B. ein Außengewinde für das Aufschrauben eines Verschlusses und Handhabungsstrukturen auf, z.B. einen Neckring. Dieser Mündungsbereich des Vorformlings soll während der Temperaturkonditionierung und während der Umformung möglichst unverändert bleiben. Der übrige Bereich eines Vorformlings ist ausgehend von diesem Mündungsbereich im Wesentlichen zylindrisch gestaltet mit einem kuppelförmig geschlossenen Boden als dessen geschlossenes Ende.

Die erfindungsgemäße Vorrichtung zur Herstellung von Behältern aus Vorformlingen wird im Betrieb von den Vorformlingen in einer Förderrichtung durchlaufen. Nachfolgend wird beschrieben, welche Einrichtungen der Vorrichtung in Förderrichtung durchlaufen werden und welche Verfahrensschritte in Förderrichtung ausgeführt werden.

Die Vorrichtung umfasst ein erstes Transferrad, mit mehreren daran umfangsverteilt angeordneten Handhabungseinrichtungen zur Aufnahme, Abgabe und zum Transport von Werkstücken. Umfangsverteilt bedeutet in diesem Zusammenhang, dass die Handhabungseinrichtungen am Umfang und umfangsbeabstandet verteilt angeordnet sind. Aus praktischen Gründen sind die Handhabungseinrichtungen dabei in aller Regel äquidistant zueinander angeordnet, d. h. stets um einen gleichen Drehwinkel zueinander versetzt. Dies verbessert die Laufruhe und erleichtert eine Synchronhaltung mit anderen Einrichtungen.

Mit dem ersten Transferrad sollen Vorformlinge transportiert werden. Entsprechend sollen die Handhabungseinrichtungen zur Aufnahme, zum Transport und zur Abgabe von Werkstücken geeignet ausgeführt sein, insbesondere zur Aufnahme, zum Transport und zur Abgabe von Vorformlingen. Wie oben ausgeführt, entsprechen Vorformlinge in ihrem Mündungsbereich bereits dem endgültigen Aussehen des fertigen Behälters, sodass Handhabungseinrichtungen für Vorformlinge und Handhabungseinrichtungen für fertige Behälter identisch ausgeführt sein können, wenn der Handhabungsangriff am oder im Mündungsbereich erfolgt. Insbesondere sind hierfür Transportdorne im Stand der Technik bekannt und vorliegend geeignet, die in die Mündungsöffnung des Vorformlings oder Behälters und von innen klemmend hineingreifen. Bekannt sind im Stand der Technik und vorliegend geeignet auch Zangen, die an Handhabungskonturen des Vorformlings greifen, z.B. an einem Neckring angreifende Zangen. Solche Transportdorne und solche Zangen sind sowohl für Vorformlinge als auch für Behälter geeignet, sie sind insgesamt für Werkstücke im Sinne dieser Anmeldung geeignet.

Durch die Haltekraft, die die beispielhaft genannten Handhabungseinrichtungen auf das Werkstück ausüben, kann das Werkstück sicher gehalten und transportiert werden. Mit Vorteil ist vorgesehen, die Handhabungseinrichtungen austauschbar zu gestalten. So können je nach Bedarf unterschiedlich geformte Werkstücke behandelt werden, wobei der Änderungsaufwand an der Vorrichtung insgesamt gering bleibt. Ein solcher Austausch kann z.B. erforderlich werden, wenn umgestellt werden soll auf die Verarbeitung von Vorformlingen mit anders dimensioniertem Mündungsbereich, z.B. mit einem vergrößerten Mündungsöffnungsdurchmesser.

Das erste Transferrad übernimmt erfindungsgemäß zwei Funktionen. Zum einen transportiert es mit Hilfe seiner Handhabungseinrichtungen die Vorformlinge z.B. von einer Zuführungseinrichtung zu einer der am Umformrad angeordneten und für eine erste Umformung geeignet ausgebildeten ersten Bearbeitungsstationen. In diesen ersten Bearbeitungsstationen laufen die Vorformlinge um das Umformrad um und werden dabei umgeformt zu Zwischenbehältern. Der Begriff "Zwischenbehälter" bringt zum Ausdruck, dass keine Vorformlinge mehr vorliegen, aber auch noch nicht die endgültig ausgeformten Behälter.

Die zweite Funktion des ersten Transferrades besteht darin, dass es mit Hilfe seiner Handhabungseinrichtungen Werkstücke vom Bypassmittel übernimmt, indem Werkstücke von am Bypassmittel angeordneten Handhabungseinrichtungen auf Handhabungseinrichtungen des ersten Transferrades übergeben werden, z.B. von Zange zu Zange, von Dorn zu Zange oder von Zange zu Dorn. Gemäß dieser zweiten Funktion transportiert das erste Transferrad diese Werkstücke zu einer der am Umformrad angeordneten und für eine zweite Umformung geeignet ausgebildeten zweiten Bearbeitungsstationen. Da diese Werkstücke bereits einen Umlauf auf dem Umformrad durchlaufen haben, handelt es sich nicht mehr um Vorformlinge, sondern um Zwischenbehälter. Die vom Bypassmittel auf das erste Transferrad zugeführten und anschließend in die zweiten Bearbeitungsstationen übergebenen Werkstücke laufen innerhalb dieser zweiten Bearbeitungsstationen erneut um das Umformrad um und erfahren dabei eine zweite Umformung.

In der Regel und mit Vorteil ist das Bypassmittel als Bypassrad ausgeführt. Die Erfindung kann aber auch mit anders gestalteten Bypassmitteln realisiert werden, technisch vorteilhaft ist aber ein Bypassrad, sodass nachfolgend vereinfachend von einem Bypassrad gesprochen wird, ohne dass damit aber andere Bypassmittel ausgeschlossen sein sollen. In den Ausführungsbeispielen sind ebenfalls ausschließlich Bypassräder dargestellt, ebenfalls ohne Beschränkung der Allgemeinheit.

Für die oben beschriebene Übergabe und Interaktion zwischen erstem Transferrad, Umformrad und Bypassrad ist ein zueinander synchronisiertes Umlaufen vorgesehen. Das erste Transferrad muss gleichzeitig Werkstücke vor deren erster Umformung, also Vorformlinge, und Werkstücke vor deren zweiter Umformung, also Zwischenbehälter, aufnehmen und transportieren können. Dies ist z.B. dadurch möglich, dass das erste Transferrad an seinem Umfang und zueinander umfangsbeanstandet, insbesondere äquidistant, alternierend Handhabungseinrichtungen für beide Arten von Werkstücken aufweist, also für Vorformlinge und für Zwischenbehälter. Diese Handhabungseinrichtungen können dabei durchaus identisch ausgeführt sein, denn sowohl Vorformlinge als auch Zwischenbehälter können auf die gleiche Art und Weise gehandhabt werden. Vorteil dieser Anordnung wäre, dass die Übergabe und Synchronisierung über Drehzahl und die Teilungsabstände der beteiligten Räder (Transfer-, Bypass- und Umformrad) realisiert werden kann.

In Förderrichtung (der Vorformlinge) hinter dem ersten Transferrad ist ein Umformrad angeordnet, auf welchem mehrere erste Bearbeitungsstationen und mehrere zweite Bearbeitungsstationen umfangsverteilt angeordnet sind, die jeweils geeignet ausgeführt sind zur Aufnahme von Werkstücken und zur Bearbeitung der Werkstücke, wobei die ersten und zweiten Arbeitsstationen alternierend auf dem Umformrad angeordnet sind.

Soweit vorstehend von alternierender Anordnung die Rede ist, so umfasst dies mehrere Möglichkeiten. So können z.B. um Umformstationen des Typs A und des Typs B alternierend angeordnet sein, indem sich Typ A und Typ B abwechseln: AB-A-B-A-B usw. Eine alternierende Anordnung ist auch dann gegeben, wenn eine gruppenweise Abwechslung erfolgt, also z.B. zwei Stationen vom Typ A zwei Stationen vom Typ B nachfolgen, dann wieder zwei Stationen vom Typ A und erneut zwei Stationen vom Typ B usw.: A-A-B-B-A-A-B-B usw. Die Gruppen können auch aus mehr als zwei Stationen des gleichen Typs bestehen. Diese Bedeutung von "alternierend" gilt auch für die weiter oben beschriebene alternierende Anordnung der Handhabungseinrichtungen und diese Bedeutung gilt auch, soweit nachfolgend und in den Ansprüchen von alternierender Anordnung die Rede ist.

Während des Umlaufs auf dem Umformrad findet die Umformung der Werkstücke statt. Die ersten Bearbeitungsstationen sind dabei so ausgestaltet, dass sie die temperaturkonditionierten Vorformlinge aufnehmen und diese durch einen Umformprozess in einen Zwischenbehälter umformen können. Die ersten Bearbeitungsstationen weisen eine erste Form und eine davon umschlossene erste Kavität mit einem ersten inneren Volumen V1 auf. Die zweiten Bearbeitungsstationen weisen zweite, von den ersten abweichende Formen mit jeweils einer zweiten Kavität mit einem zweiten inneren Volumen V2 auf, welches größer ist als das erste Volumen V1. Die zweiten Bearbeitungsstationen sind so ausgestaltet, dass sie ein Werkstück, z.B. einen Zwischenbehälter, aufnehmen und diesen durch einen Umformprozess in einen Behälter umformen können.

Die Bearbeitungsstationen sind dabei so ausgestaltet, dass sie in eine geöffnete und eine geschlossene Positionierung bringbar sind. Auf diese Weise können die Werkstücke in die Bearbeitungsstation eingeführt und aus ihr entnommen werden (geöffneter Zustand) und die Werkstücke können durch Einspeisen eines Druckmediums in das Innere des Werkstücks gegen die Innenwände der geschlossenen Form aufgeweitet werden, während sie von der Form umgeben und gehalten sind. Mit Vorteil wird vorgeschlagen, dass die Formen der Bearbeitungsstationen austauschbar gestaltet sind. Auf diese Weise kann ein Umrüsten der Vorrichtung auf neue Werkstücke erfolgen, z.B. weil andere Vorformlinge in andere Behälter umgeformt werden sollen.

Auf diese Weise ist auch erreichbar, dass die ersten und zweiten Bearbeitungsstationen mit identischen Formen versehen werden und in einem alternativen Betriebsmodus der Vorrichtung jede der Bearbeitungsstationen mit Vorformlingen beschickt wird und unter Umgehung des Bypassrades, das dann auch entfernt werden könnte, jeder entstehende Behälter vom zweiten Transferrad abgeführt wird. Die Vorrichtung kann dadurch mit vergrößerter Variabilität eingesetzt werden, z.B. in einem ersten Betriebsmodus gemäß des erfindungsgemäßen Verfahrens und als erfindungsgemäße Vorrichtung, und in einem alternativen Betriebsmodus wie eine im Stand der Technik bekannte Vorrichtung.

Es ist im Stand der Technik bekannt, die Formen der Umformstationen mehrteilig auszubilden. Insbesondere ist eine dreiteilige Form bekannt, wobei die Form dann aus zwei Seitenschalen und einer Bodenform besteht. Es ist auch bekannt, eine buchartige Aufklappbarkeit dieser Formen vorzusehen. Daher sind weitere Erläuterungen hierzu nicht erforderlich. Eine solche dreiteilige Form ist eine bevorzugte Ausführungsform der vorliegenden Erfindung, insbesondere in Verbindung mit einer buchartigen Aufklappbarkeit.

In Förderrichtung (der Vorformlinge) hinter dem Umformrad ist ein zweites Transferrad angeordnet, an dem umfangsverteilt mehrere Handhabungseinrichtungen zur Aufnahme, Abgabe und zum Transport von das Umformrad verlassenden Werkstücken (Zwischenbehälter, Behälter) aufweist.

Auch das zweite Transferrad erfüllt eine Doppelfunktion. Die am zweiten Transferrad umfangsverteilt angeordneten Handhabungseinrichtungen sind daher derart ausgestaltet sind, dass sie Werkstücke aus den ersten und aus den zweiten Bearbeitungsstationen übernehmen können. Es müssen also Zwischenbehälter und Behälter gehandhabt werden, also übernommen, gehalten, transportiert und übergeben werden können.

Das zweite Transferrad nimmt sämtliche Werkstücke aus den jeweiligen Bearbeitungsstationen des Umformrades auf. Das sind zum einen Werkstücke in Form von Zwischenbehältern, die aus einer der ersten Bearbeitungsstationen entnommen werden, die also ursprünglich als Vorformlinge auf das Umformrad übergeben worden sind und während des Umlaufs in den Zwischenbehälter umgeformt wurden. Diese werden nachfolgend an das Bypassrad übergeben. Das sind zum anderen Werkstücke in Form von Behältern, die aus einer der zweiten Bearbeitungsstationen entnommen werden, die also ursprünglich als Zwischenbehälter auf das Umformrad übergeben worden sind und während des Umlaufs in den Behälter umgeformt wurden. Werkstücke, die als Behälter aus einer der zweiten Bearbeitungsstationen entnommen werden, werden von dem zweiten Transferrad nicht auf das Bypassrad übergeben, sondern z.B. einer Abführeinrichtung übergeben. Auf diese Weise verlassen die Werkstücke, nämlich die fertigen Behälter, die beschriebene Vorrichtung.

Zwischen dem ersten und dem zweiten Transferrad ist ein Bypassrad als bevorzugte Ausführungsform eines Bypassmittels angeordnet, das bevorzugt mehrere umfangsverteilt daran angeordnete Handhabungseinrichtungen zur Aufnahme, Abgabe und zum Transport von Werkstücken vom zweiten zum ersten Transferrad aufweist.

Das Bypassrad stellt die Verbindung zwischen dem zweiten und dem ersten Transferrad her. Es übernimmt vom zweiten Transferrad ausschließlich Werkstücke, die Zwischenbehälter sind, und übergibt diese an das erste Transferrad.

Die genannten Räder sind dabei so zueinander synchronisiert drehangetrieben ausgebildet und die Handhabungseinrichtungen und Bearbeitungsstationen sind so umfangsverteilt auf den Rädern angeordnet, dass das erste Transferrad nur Werkstücke an die ersten Bearbeitungsstationen übergibt, die nicht vom Bypassrad auf das erste Transferrad gelangen, und das erste Transferrad übergibt Werkstücke an die zweiten Umformungsstationen, wenn die Werkstücke vom Bypassrad auf das erste Transferrad gelangen. In analoger Weise übergibt das zweite Transferrad nur Werkstücke an das Bypassrad, welche aus den ersten Bearbeitungsstationen entnommen werden, während Werkstücke aus den zweiten Bearbeitungsstationen nicht auf das Bypassrad übergeben werden, sondern aus der Vorrichtung ausgeschleust werden. Das Bypassrad wiederum transportiert ausschließlich Zwischenbehälter vom zweiten Transferrad zum ersten Transferrad.

Das erste Transferrad, das zweite Transferrad und das Bypassrad sind in einer bevorzugten Ausführungsform derart aufeinander abgestimmt, dass das Bypassrad nur jedes zweite Werkstück, nämlich die Zwischenbehälter, vom zweiten Transferrad übernimmt und diese an jede zweite Handhabungseinrichtung des ersten Transferrades übergibt.

Dabei ist insbesondere kontinuierliches Umlaufen der beschriebenen Räder bevorzugt, z.B. gegenüber einem taktweisen Umlaufen. Bei einem taktweisen Umlaufprozess drehen sich die beschriebenen Räder diskontinuierlich um einen definierten Kreiswinkel um die jeweilige Raddrehachse. Bei einem kontinuierlichen Umlaufen führen die Räder eine stetige Drehbewegung um ihre Raddrehachsen aus, wodurch der erreichbare Durchsatz höher ist.

Das zweite Transferrad übernimmt Werkstücke sowohl aus den ersten als auch aus den zweiten Bearbeitungsstationen und übergibt dabei nur die Werkstücke aus der ersten Bearbeitungsstation an die am Bypassrad angeordneten Handhabungseinrichtungen.

Dabei sind die ersten und zweiten Bearbeitungsstationen jeweils als Umformstationen ausgeführt und bevorzugt mit mehrteilig ausgebildeten Formen, die relativ zueinander in eine geöffnete und eine geschlossene Positionierung bringbar sind, wobei in der geschlossenen Positionierung eine innere Kavität mit einem Volumen umschlossen ist.

Die Formen der ersten Bearbeitungsstationen unterscheiden sich von den Formen der zweiten Bearbeitungsstationen, indem die Formen der zweiten Bearbeitungsstationen innere Kavitäten mit einem Volumen V2 umschließen, das größer ist als das Volumen V1 der inneren Kavität der Formen der ersten Bearbeitungsstationen.

Ein typischer Anwendungsfall der erfindungsgemäßen Vorrichtung und des erfindungsgemäßen Verfahrens kann z.B. darin bestehen, dass in den ersten Bearbeitungsstationen eine Umformung der Vorformlinge in einen Zwischenbehälter erfolgt, der z.B. noch ohne Behälterfüße und/oder ohne stabilisierende Ausprägungen wie Rippen, Sicken oder dergleichen, und/oder ohne dekorative Elemente ausgeführt ist. Diese am Zwischenbehälter fehlenden Füße, Ausprägungen und/oder dekorativen Elemente können dann z.B. während der Umformung in den zweiten Bearbeitungsstationen ausgeformt werden.

Ein weiterer typischer Anwendungsfall der erfindungsgemäßen Vorrichtung und des erfindungsgemäßen Verfahrens kann z.B. darin bestehen, dass der fertige Behälter mit einem Griff versehen sein soll oder mit Befestigungsstrukturen, an denen später ein Griff befestigt werden kann. Bei der Umformung des Vorformlings in den Zwischenbehälter kann dies zunächst unberücksichtigt bleiben, d. h. der Zwischenbehälter weist zunächst weder einen Griff auf noch die genannten Befestigungsstrukturen. Diese werden erst bei der Umformung in den zweiten Bearbeitungsstationen ausgeprägt, z.B. indem in die zweiten Bearbeitungsstationen Behältergriffe eingelegt sind oder indem die Formen der zweiten Bearbeitungsstationen entsprechende Konturierungen aufweisen, um bei Umformung des Zwischenbehälters in den Behälter am Behälter diese Befestigungsstrukturen entstehen zu lassen.

Ein weiterer typischer Anwendungsfall der erfindungsgemäßen Vorrichtung und des erfindungsgemäßen Verfahrens kann z.B. darin bestehen, dass die Formen der zweiten Bearbeitungsstationen auf eine erhöhte Temperatur gebracht werden, damit ein Heat-Set-Verfahren ausgeführt werden kann. Die Temperatur der Formen sollte dann z.B. oberhalb von 80°C gehalten sein und der fertig ausgeformte Behälter sollte für eine gewisse Zeit unter Beibehaltung des Innendrucks gegen die erwärmte Form gedrückt bleiben. Entsprechende Temperiermittel für Formen sind im Stand der Technik bekannt.

Denkbar ist aber auch, dass die zweiten Formen auf einer niedrigeren Temperatur als die ersten Formen gehalten sind, z.B. um nach dem zweiten Umformschritt eine effektive und frühe Kühlung der fertigen Behälter zu erreichen, z.B. um die Behälter direkt im Anschluss mit einem Griff zu versehen, ohne längeres Zuwarten auf eine eintretende Stabilisierung der Behälter durch Abkühlung. Die Behälter könnten auch anderen Bearbeitungsschritten zeitnah nach dem Verlassen der Form unterworfen werden, z.B. einem Etikettieren und/oder Befüllen, usw. Im Stand der Technik bekannte Einrichtungen zum gezielten Kühlen der Behälter oder von Teilbereichen der Behälter, z.B. der Behälterböden, können dadurch ebenfalls vermieden werden.

Ein weiterer typischer Anwendungsfall der erfindungsgemäßen Vorrichtung und des erfindungsgemäßen Verfahrens und bezüglich temperierter Formen kann vorsehen, dass die Formen der ersten Bearbeitungsstation auf einer erhöhten Temperatur gebracht sind. "Erhöht" meint dabei durch Temperiermittel gezielt auf eine erhöhte Temperatur gebracht über das hinaus, was an thermischer Energie durch die Aufnahme der temperierten Vorformlinge in die Formen eingetragen wird. Es ist dadurch möglich, einen Schrumpfungsprozess in dem Zwischenbehälter auszulösen, nämlich indem der Umformdruck abgelassen wird, sobald bzw. kurz nachdem die Zwischenbehälterform erreicht ist, wodurch der Zwischenbehälter nicht länger gegen die heiße äußere Form gedrückt wird, sodass die heiße Form ein Rückschrumpfen des Zwischenbehälters bewirkt.

Sowohl die ersten als auch die zweiten Bearbeitungsstationen können Reckstangen aufweisen, um den jeweiligen Umformprozess durch die Reckstange unterstützt auszuführen. Soweit bei der Umformung des Zwischenbehälters in den endgültigen Behälter keine signifikante Volumenänderung und Materialumverteilung mehr stattfindet, können die zweiten Bearbeitungsstationen z.B. auch ohne Reckstange ausgeführt werden.

Es ist vorstehend von ersten und zweiten Bearbeitungsstationen die Rede gewesen. Die Erfindung kann aber auch noch eine dritte Art von Bearbeitungsstationen auf dem Umformrad vorsehen. Die Übergabe der Werkstücke gestaltet sich dadurch aufwendiger und unkomplizierter, beispielsweise könnte eine Übergabe auf das Umformrad an einer zweiten Drehposition des Umformrades erfolgen. Denkbar ist auch, dass die Stationen nicht nur in Umfangsrichtung beabstandet zueinander angeordnet werden, sondern auch in einer Höhenrichtung. Primär zielt die Erfindung aber auf zwei Umformprozesse ab, die auf dem gleichen Arbeitrad ausführbar sind. Die Erfindung beschränkt sich aber nicht auf zwei Bearbeitungsstationen in Form von Umformstationen, sondern es kann auch noch eine dritte Art von Bearbeitungsstationen vorgesehen werden.

Weitere Vorteile und Eigenschaften der Erfindung ergeben sich aus der nachfolgenden Beschreibung zu Zeichnungen, in denen die Erfindung beispielsweise und schematisch anhand von Ausführungsbeispielen dargestellt ist. Es zeigen:
- Fig. 1: eine schematische Ansicht einer erfindungsgemäßen Vorrichtung, und
- Fig. 2: einen Längsschnitt durch ein Beispiel für eine erste Form, in der ein Vorformling gereckt und expandiert wird,

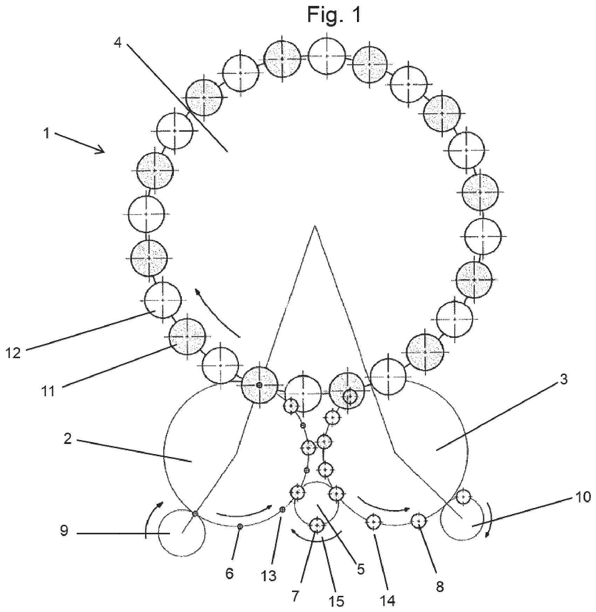

Figur 1 zeigt eine beispielhafte Ausführungsform einer erfindungsgemäße Vorrichtung 1 mit einem ersten Transferrad 2, mit einem zweiten Transferrad 3, mit einem Umformrad 4 und mit einem Bypassrad 5 sowie mit Werkstücken in Form von Vorformlingen 6, mit Werkstücken in Form eines Zwischenbehälters 7 und mit Werkstücken in Form eines Behälters 8. Zusätzlich ist eine Eingabeeinrichtung 9 und eine Ausgabeeinrichtung 10 gezeigt, sowie eine erste Bearbeitungsstation 11 und eine zweite Bearbeitungsstation 12, beide auf dem Umformrad 4 angeordnet. Die zu jedem drehenden Rad eingezeichneten Richtungspfeile zeigen die Drehrichtung der einzelnen Räder an und die Förderrichtung der davon transportierten Werkstücke.

Über die Eingabeeinrichtung 9 werden noch nicht umgeformte Werkstücke 6 (nämlich Vorformlinge 6, z.B. aus einer im Stand der Technik bekannten Temperiereinrichtung kommend und also nach erfolgter Temperaturkonditionierung) an Handhabungseinrichtungen 13 des ersten Transferrades 2 übergeben. Dabei wird im dargestellten Beispiel lediglich jede zweite Handhabungseinrichtung 13 mit den noch nicht umgeformten Werkstücken 6 bestückt. Diese werden der Umlaufrichtung des ersten Transferrades 2 folgend in Richtung auf das Umformrad 4 transportiert und in einem Übergabebereich auf das Umformrad 4 in eine erste Bearbeitungsstation 11 übergeben.

Das Umformrad 4 weist erste 11 und zweite Bearbeitungsstationen 12 in alternierender Abfolge auf, vorliegend wechselt sich eine Bearbeitungsstation der ersten mit einer der zweiten Art ab, wobei diese Bearbeitungsstationen 11, 12 am Umfang des Umformrades 4 mit äquidistantem Umfangsabstand angeordnet sind. In jede erste Bearbeitungsstation 11 wird ein noch nicht umgeformtes Werkstück 6 übergeben, während keine der zweiten Bearbeitungsstationen 12 mit einem solchen, noch nicht umgeformten Werkstück 6 beschickt wird. Dies ist realisiert, indem das erste Transferrad 2 und das Umformrad über geeignete Teilungsabstände zwischen den ersten und zweiten Bearbeitungsstationen 11, 12 und zwischen den Handhabungseinrichtungen 13 des ersten Transferrades 2 verfügen, sowie synchronisiert drehangetrieben umlaufen.

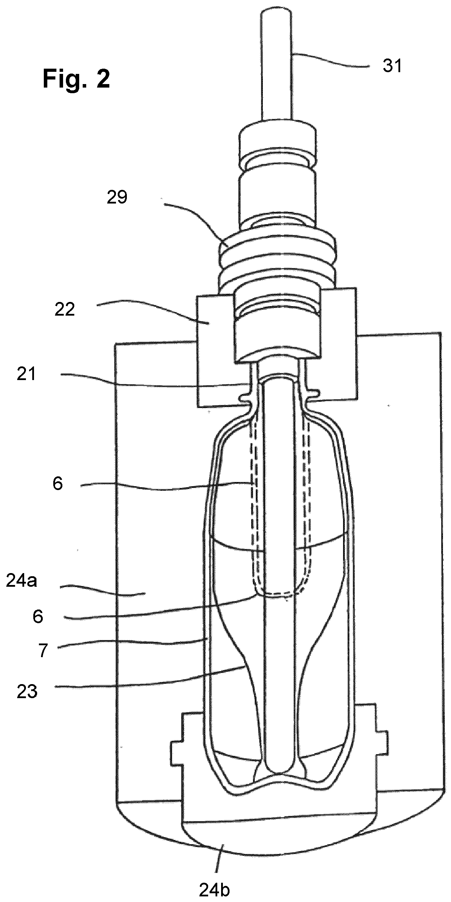

Die in eine erste Bearbeitungsstation 11 übergebenen, noch nicht umgeformten Werkstücke 6 laufen in Drehrichtung des Umformrades 4 auf dem Umformrad 4 um und werden im Laufe eines Umlaufs in einen Zwischenbehälter 7 umgeformt. Bei der Übernahme befindet sich die Bearbeitungsstation 11 in einem geöffneten Zustand. Die Bearbeitungsstation 11 geht nach Übergabe des Werkstückes 6 in einen geschlossenen Zustand über und der Umformvorgang kann ausgeführt werden. Dabei wird das ursprünglich noch nicht umgeformte Werkstück 6 in einen Zwischenbehälter 7 umgeformt, z.B. wie anhand von Figur 2 später erläutert. Nahe des zweiten Transferrades 3 ist dieses Umformen abgeschlossen und die erste Bearbeitungsstation 11 öffnet sich, sodass das Werkstück 7, nämlich der entstandene Zwischenbehälter, von den Handhabungseinrichtungen 14 des zweiten Transferrades 3 aus der ersten Bearbeitungsstation 11 entnommen werden kann. Das Werkstück liegt also nun als Zwischenbehälter 7 vor und weist ein erstes Volumen V1 auf.

Die vom Umformrad 4 aus den ersten Bearbeitungsstationen 11 übernommenen Werkstücke 7 werden nun der Umlaufrichtung des zweiten Transferrades 3 folgend gefördert in Richtung auf das Bypassrad 5. In einem Übergabebereich zwischen dem zweiten Transferrad 3 und dem Bypassrad 5 erfolgt eine Übergabe der von den Handhabungseinrichtungen 14 des zweiten Transferrades 3 gehaltenen Werkstücke 7 auf Handhabungseinrichtungen 15 des Bypassrades 5. Die Werkstücke 7 folgen nunmehr also der Umlaufrichtung des Bypassrades 5 und werden in einem Übergabebereich zwischen dem Bypassrad 5 und dem ersten Transferrad 2 auf nicht mit Werkstücken belegte Handhabungseinrichtungen 13 übergeben. Das erste Transferrad 2 fördert also in seinem Umlaufbereich vom Übergabebereich des Bypassrades 5 zum Übergabebereich auf das Umformrad 4 mit seinen Handhabungseinrichtungen 13 bei vollständiger Beladung in alternierender Abfolge Vorformlinge 6 und Zwischenbehälter 7.

Die auf dem ersten Transferrad 2 umlaufenden Zwischenbehälter 7 werden bei Erreichen des Übergabebereiches zum Umformrad 4 in geöffnete zweite Bearbeitungsstationen 12 übergeben. Nachfolgend schließt sich die zweite Bearbeitungsstation 12 und während des weiteren Umlaufs des Umformrades 4 wird der Zwischenbehälter 7 in den Behälter 8 umgeformt. Das Werkstück bzw. der Behälter 8 weist nach der zweiten Umformung ein zweites Innenvolumen V2 auf, welches größer als das erste Innenvolumen V1 ist. Nahe dem Übergabebereich zum zweiten Transferrad 3 öffnet sich die zweite Bearbeitungsstation 12, sodass das Werkstück 8 von den unbesetzten Handhabungseinrichtungen 14 des zweiten Transferrades 3 aus dem Umformrad 4 entnommen werden kann und entnommen wird. Das Werkstück liegt nun als fertig ausgeformter Behälter 8 vor und weist ein zweites Volumen V2 auf.

Im Umlaufbereich des zweiten Transferrades 3 zwischen dem Entnahmebereich aus dem Umformrad 4 und dem Übergabebereich zum Bypassrad 5 sind also die Handhabungseinrichtungen 14 bei voller Beladung alternierend mit Zwischenbehältern 7 und fertig ausgeformten Behältern 8 bestückt. Nur die mit fertigen Behältern 8 bestückten Handhabungseinrichtungen 14 passieren ohne Übergabevorgang den Übergabebereich zum Bypassrad 5 und fördern in Drehrichtung des zweiten Transferrades 3 die fertigen Behälter 8 zu einer Ausgabeeinrichtung 10.

Auch diese beschriebenen Übergabevorgänge und Abläufe sind im dargestellten Beispiel realisiert, indem das erste Transferrad 2, das Umformrad 4, das zweite Transferrad 3 und das Bypassrad 5 über geeignete Teilungsabstände zwischen den ersten und zweiten Bearbeitungsstationen 11, 12 und zwischen den Handhabungseinrichtungen 13, 14, 15 verfügen, sowie synchronisiert drehangetrieben umlaufen.

Figur 2 zeigt exemplarisch den grundsätzlichen Aufbau einer Umformstation. Prinzipiell und in grundsätzlicher Hinsicht könnten die ersten und die zweiten Bearbeitungsstationen 11, 12 des Umformrades 4 in dieser dargestellten Weise ausgeführt sein. Die ersten und die zweiten Bearbeitungsstationen wären aber unterscheidbar, da sie anspruchsgemäß unterschiedliche Formen aufweisen.

Die gezeigte Umformstation dient der Umformung eines Vorformlings 6 in einen Zwischenbehälter 7. Die Umformstation ist dazu mit einer mehrteilig ausgeführten Blasform 24a, 24b ausgestattet, in die ein Vorformling 6 einsetzbar ist. Der Vorformling 6 kann ein spritzgegossenes Teil aus Polyethylenterephthalat (PET) sein. Zur Ermöglichung eines Einsetzens des Vorformlings 6 in die Blasform 24a, 24b und zur Ermöglichung eines Herausnehmens des Zwischenbehälters 7 besteht die Blasform aus Formhälften 24a und einem Bodenteil 24b, das z.B. von einer nicht dargestellten Bodenhubvorrichtung positionierbar ist. Der Vorformling 6 kann im Bereich der Umformstation von einem Transportdorn 9 gehalten sein, der gemeinsam mit dem Vorformling 6 innerhalb der Vorrichtung umläuft. Es ist aber auch möglich, den Vorformling 6 beispielsweise über Zangen oder andere Handhabungsmittel direkt in die Blasform 24a, 24b einzusetzen.

Zur Ermöglichung einer Druckluftzuleitung kann oberhalb des Transportdornes 29 z.B. ein Anschlußkolben angeordnet sein, der dem Vorformling 6 Druckluft zuführt und gleichzeitig eine Abdichtung relativ zum Transportdorn 29 vornimmt. Bei abgewandelten Konstruktionen ist es grundsätzlich aber auch denkbar, feste Druckluftzuleitungen zu verwenden.

Eine Reckung des Vorformlings 6 erfolgt bei diesem Ausführungsbeispiel mit Hilfe einer Reckstange 31, die z.B. von einem nicht dargestellten Antrieb (z.B. von einem Linearmotor oder kurvengesteuert) positioniert wird.

Nach einem Schließen der Formhälften 24a und der Bodenform 24b erfolgt in der Regel eine Verriegelung relativ zueinander mit Hilfe einer nicht dargestellten Verriegelungseinrichtung.

Zur Anpassung an unterschiedliche Formen eines Mündungsabschnittes 21 des Vorformlings 6 ist gemäß Fig. 2 die Verwendung separater Gewindeeinsätze 22 im Bereich der Blasform 24a, 24b vorgesehen.

Fig. 2 zeigt zusätzlich zum Zwischenbehälter 7 auch gestrichelt eingezeichnet den Vorformling 6 und schematisch eine sich entwickelnde Zwischenbehälterblase 23.

Die gezeigte Umformstation könnte auch der Umformung eines Zwischenbehälters 7 in einen Behälter 8 dienen, ohne dass die Umformstation grundsätzlich anders aufgebaut sein müsste. In die entsprechende Blasform 24a, 24b würde dann lediglich ein Zwischenbehälter 7 eingesetzt, in einen Behälter 8 umgeformt und dann entnommen werden. Öffnen und Schließen der Blasform, Zuführung der Druckluft und die optionale Verwendung einer Reckstange könnten wie zuvor beschrieben ausgeführt werden.

Statt Druckluft könnte auch ein anderes Umformfluid zugeführt werden, insbesondere auch ein flüssiges Umformfluid, z.B. das abzufüllende Füllgut. Denkbar und vorteilhaft ist, die Umformung in den ersten Umformstationen mit einem gasförmigen Umformfluid durchzuführen, das z.B. eine sterilisierende Wirkung haben kann, und die Umformung in den zweiten Umformstationen mit einem flüssigen Umformfluid auszuführen. Eine Umkehrung ist ebenfalls möglich, z.B. die Verwendung eines flüssigen Umformfluides in dem ersten Umformschritt und die Verwendung eines gasförmigen Umformfluides in einem zweiten Umformschritt, z.B. Abfüllung einer unkarbonisierten oder gering karbonisierten Flüssigkeit im ersten Schritt und Verwendung eines CO2-reichen gasförmigen Umformfluides im zweiten Umformschritt, um den Karbonisierungsgrad der Flüssigkeit einzustellen und zu erhöhen. Diese vorstehend erläuterten Möglichkeiten einer hybriden Umformung sind unabhängig von allen anderen vorstehend beschriebenen Merkmalen der Ausführungsbeispiele möglich und erfindungsgemäß.

## Patentansprüche

1. Vorrichtung (1) zur Herstellung von Behältern (8) aus Vorformlingen (6), die im Herstellungsbetrieb der Vorrichtung (1) diese in einer Förderrichtung durchlaufen, wobei die Vorrichtung (1)
- ein erstes Transferrad (2) mit mehreren umfangsverteilt daran angeordneten Handhabungseinrichtungen (13) zur Aufnahme, zum Transport und zur Abgabe von Werkstücken (6, 7) aufweist,
- ein Umformrad (4), das in Förderrichtung hinter dem ersten Transferrad (2) angeordnet ist, und auf dem mehrere erste Bearbeitungsstationen (11) und mehrere zweite Bearbeitungsstationen (12) umfangsverteilt angeordnet sind, die jeweils geeignet ausgeführt sind zur Aufnahme von Werkstücken (6, 7) und zur Bearbeitung der Werkstücke (6, 7), wobei die ersten und zweiten Bearbeitungsstationen (11, 12) alternierend auf dem Umformrad (4) angeordnet sind,
- ein zweites Transferrad (3), das in Förderrichtung hinter dem Umformrad (4) angeordnet ist, und das umfangsverteilt angeordnet mehrere Handhabungseinrichtungen (14) zur Aufnahme, zum Transport und zur Abgabe von das Umformrad (4) verlassenden Werkstücken (7, 8) aufweist,
- ein Bypassmittel (5), das zwischen dem ersten und dem zweiten Transferrad (2, 3) angeordnet ist, und wenigstens eine Handhabungseinrichtung (15) zur Aufnahme, zum Transport und zur Abgabe von Werkstücken (7) vom zweiten Transferrad (3) zum ersten Transferrad (2) aufweist;
- wobei die genannten Umform-, und Transferräder und das Bypassmittel (2, 3, 4, 5) so zueinander synchronisiert angetrieben ausgebildet sind, und die Handhabungseinrichtungen (13, 14) und Bearbeitungsstationen (11, 12) so umfangsverteilt auf den Umform-, und Transferrädern und dem Bypassmittel (2, 3, 4, 5) angeordnet sind, dass das erste Transferrad (2) nur Werkstücke (6) an die ersten Umformstationen (11) übergibt, die nicht vom Bypassmittel (5) auf das erste Transferrad (2) gelangen, und es Werkstücke (7) an die zweiten Umformstationen (12) übergibt, wenn die Werkstücke (7) vom Bypassmittel (5) auf das erste Transferrad (2) gelangen,
- wobei das zweite Transferrad (3) Werkstücke (7, 8) sowohl aus den ersten und zweiten Bearbeitungsstationen (11, 12) übernimmt und nur die Werkstücke (7) aus der ersten Bearbeitungsstation (11) auf das Bypassmittel (5) übergibt,
und wobei das Bypassmittel (5) nur Werkstücke (7) vom zweiten zum ersten Transferrad (3, 2) transportiert, die vom zweiten Transferrad (3) aus den ersten Bearbeitungsstationen (11) entnommen worden sind;
**dadurch gekennzeichnet, dass**
- die ersten und zweiten Bearbeitungsstationen (11, 12) jeweils als Umformstationen ausgeführt sind mit mehrteilig ausgebildeten Formen (24a, 24b), die relativ zueinander in eine geöffnete und in eine geschlossene Positionierung bringbar sind, wobei in der geschlossenen Positionierung eine innere Kavität mit einem Volumen umschlossen ist,
- wobei sich die Formen der ersten Bearbeitungsstationen (11) von den Formen der zweiten Umformstationen (12) unterscheiden, indem nämlich die Formen der zweiten Bearbeitungsstationen (12) innere Kavitäten mit einem Volumen V2 umschließen, das größer ist als das Volumen V1 der inneren Kavitäten der Formen der ersten Bearbeitungsstationen (11),
- wobei bevorzugt wenigstens die ersten Bearbeitungsstationen (11), weiter bevorzugt sowohl die ersten (11) als auch die zweiten Bearbeitungsstationen (12) Reckstangen (31) aufweisen,
- wobei weiter bevorzugt das Bypassmittel als Bypassrad (5) ausgebildet ist, wobei weiter bevorzugt mehrere Handhabungseinrichtungen (15) umfangsverteilt an dem Bypassrad (5) angeordnet sind.

2. Vorrichtung nach Anspruch 1, **dadurch gekennzeichnet, dass** die Handhabungseinrichtungen (13, 14, 15), die am ersten Transferrad (2), am zweiten Transferrad (3) und/oder am Bypassmittel bzw. Bypassrad (5) angeordnet sind, als Greifdorne oder Greifzangen ausgeführt sind.

3. Vorrichtung nach einem der voranstehenden Ansprüche, **dadurch gekennzeichnet, dass** das erste Transferrad (2), das zweite Transferrad (3), das Umformrad (4) und das Bypassrad (5) kontinuierlich und zueinander synchronisiert umlaufend drehangetrieben sind.

4. Vorrichtung nach einem der voranstehenden Ansprüche, **dadurch gekennzeichnet, dass** die Formen (24a, 24b) der ersten und/oder der zweiten Bearbeitungsstationen (11, 12) austauschbar ausgeführt sind.

5. Vorrichtung nach einem der voranstehenden Ansprüche, **dadurch gekennzeichnet, dass** die Handhabungseinrichtungen (13, 14, 15) des ersten (2) und/oder des zweiten (3) und/oder des Bypassmittels bzw. Bypasrades (5) austauschbar ausgeführt sind.

6. Vorrichtung nach einem der voranstehenden Ansprüche, **dadurch gekennzeichnet, dass** das erste Transferrad (2) synchronisiert mit einer Eingabeeinrichtung (9) zur Übergabe von Vorformlingen (6) an das erste Transferrad (2) verbunden ist und/oder das zweite Transferrad (3) synchronisiert mit einer Ausgabeeinrichtung (10) zum Entnehmen von Werkstücken (8) aus der Vorrichtung verbunden ist.

7. Vorrichtung nach einer der vorhergehenden Ansprüche, **dadurch gekennzeichnet, dass** die Formen (24a, 24b) der zweiten Bearbeitungsstationen (12) auf einer anderen Temperatur als die Formen der ersten Behandlungsstationen (11) gehalten sind, insbesondere auf einer höheren Temperatur.

8. Vorrichtung nach einer der vorhergehenden Ansprüche, **dadurch gekennzeichnet, dass** in die Formen (24a, 24b) der zweiten Bearbeitungsstationen (12) Handgriffe eingelegt sind und/oder die Formen (24a, 24b) ausgeformt sind zur Bildung von Haltestrukturen für anbringbare Handgriffe in den darin ausgeformten Werkstücken.

9. Vorrichtung nach einem der vorhergehenden Ansprüche, **dadurch gekennzeichnet, dass** die Formen der ersten Bearbeitungsstationen (11) keine Konturen für Behälterfüße aufweisen und die Formen (24a, 24b) der zweiten Bearbeitungsstationen (12) Konturen für Behälterfüße aufweisen, insbesondere für einen Petaloid-Boden.

10. Verfahren zur Herstellung von Behältern (8) aus Vorformlingen (6) in einer Vorrichtung (1), die in einer Förderrichtung durchlaufen wird, wobei in dem Verfahren Werkstücke (6, 7, 8) von einem ersten (2) und von einem zweiten Transferrad (3) der Vorrichtung (1), von einem Bypassmittel (5) der Vorrichtung (1) und von einem Umformrad (4) der Vorrichtung (1) transportiert werden,
- wobei am ersten Transferrad (2) mehrere Handhabungseinrichtungen (13) zur Aufnahme, zum Transport und zur Abgabe von Werkstücken (6, 7) umfangsverteilt angeordnet werden,
- wobei das Umformrad (4) in Förderrichtung hinter dem ersten Transferrad (2) angeordnet wird und auf dem Umformrad (4) mehrere erste Bearbeitungsstationen (11) und mehrere zweite Bearbeitungsstationen (12) umfangsverteilt angeordnet werden, die jeweils geeignet ausgeführt sind zur Aufnahme von Werkstücken (6, 7) und zur Bearbeitung der Werkstücke (6, 7), wobei die ersten und zweiten Bearbeitungsstationen (11, 12) alternierend auf dem Umformrad (4) angeordnet werden,
- wobei das zweite Transferrad (3) in Förderrichtung hinter dem Umformrad (4) angeordnet ist und umfangsverteilt daran angeordnet mehrere Handhabungseinrichtungen (14) zur Aufnahme, Abgabe und zum Transport von das Umformrad (4) verlassenden Werkstücken (7, 8) aufweist,
- wobei das Bypassmittel (5) zwischen dem ersten und dem zweiten Transferrad (2, 3) angeordnet wird und wenigstens eine Handhabungseinrichtung (15) zur Aufnahme, zum Transport und zur Abgabe von Werkstücken (7) vom zweiten Transferrad (3) zum ersten Transferrad (2) daran angeordnet wird,
- wobei die genannten Umform- und Transferräder und das Bypassmittel (2, 3, 4, 5) so zueinander synchronisiert angetrieben werden, und die Handhabungseinrichtungen (13, 14) und Bearbeitungsstationen (11, 12) so umfangsverteilt bzw. verteilt auf den Umform- und Transferrädern und dem Bypassmittel (2, 3, 4, 5) angeordnet werden, dass das erste Transferrad (2) nur Werkstücke (6) an die ersten Umformstationen (11) übergibt, die nicht vom Bypassmittel (5) auf das erste Transferrad (2) gelangen, und es Werkstücke (7) an die zweiten Umformstationen (12) übergibt, wenn die Werkstücke (7) vom Bypassmittel (5) auf das erste Transferrad (2) gelangen,
- wobei das zweite Transferrad (3) Werkstücke (7,8) sowohl aus den ersten und zweiten Bearbeitungsstationen (11, 12) übernimmt und nur die Werkstücke (7) aus der ersten Bearbeitungsstation (11) auf das Bypassmittel (5) übergibt,
und wobei das Bypassmittel (5) nur Werkstücke (7) vom zweiten zum ersten Transferrad (3, 2) transportiert, die vom zweiten Transferrad (3) aus den ersten Bearbeitungsstationen (11) entnommen worden sind;
**dadurch gekennzeichnet, dass**
- die ersten und zweiten Bearbeitungsstationen (11, 12) jeweils als Umformstationen ausgeführt werden mit mehrteilig ausgebildeten Formen (24a, 24b), die relativ zueinander in eine geöffnete und in eine geschlossene Positionierung bringbar sind, wobei in der geschlossenen Positionierung eine innere Kavität mit einem Volumen umschlossen wird,
- wobei sich die Formen der ersten Bearbeitungsstationen (11) von den Formen der zweiten Umformstationen (12) unterscheiden, indem nämlich die Formen der zweiten Bearbeitungsstationen (12) innere Kavitäten mit einem Volumen V2 umschließen, das größer ist als das Volumen V1 der inneren Kavitäten der Formen der ersten Bearbeitungsstationen (11),
- wobei bevorzugt in den ersten Bearbeitungsstationen, weiter bevorzugt sowohl in den die ersten als auch in den zweiten Bearbeitungsstationen eine Reckung durch eine Reckstange erfolgt,
- wobei weiter bevorzugt das Bypassmittel als Bypassrad (5) ausgebildet wird, wobei weiter bevorzugt mehrere Handhabungseinrichtungen (15) umfangsverteilt an dem Bypassrad (5) angeordnet werden.

11. Verfahren nach Anspruch 10, **dadurch gekennzeichnet, dass** die Handhabungseinrichtungen (13, 14, 15), die am ersten Transferrad (2), am zweiten Transferrad (3) und/oder am Bypassmittel bzw. Bypassrad (5) angeordnet sind, als Greifdorne oder Greifzangen ausgeführt werden.

12. Verfahren nach einem der Ansprüche 10 oder 11, **dadurch gekennzeichnet, dass** das erste Transferrad (2), das zweite Transferrad (3), das Umformrad (4) und das Bypassrad (5) kontinuierlich und zueinander synchronisiert umlaufen.

13. Verfahren nach einem der voranstehenden Ansprüche 10 bis 12, **dadurch gekennzeichnet, dass** die Formen (24a, 24b) der ersten und/oder der zweiten Bearbeitungsstationen (11, 12) austauschbar sind und/oder die Handhabungseinrichtungen (13, 14, 15) austauschbar sind.

14. Verfahren nach einem der voranstehenden Ansprüche 10 bis 13, **dadurch gekennzeichnet, dass** das erste Transferrad (2) synchronisiert mit einer Eingabeeinrichtung (9) zur Übergabe von Vorformlingen an das erste Transferrad (2) verbunden wird und/oder das zweite Transferrad (3) synchronisiert mit einer Ausgabeeinrichtung (10) zum Entnehmen von Werkstücken verbunden wird.

15. Verfahren nach einem der vorhergehenden Ansprüche 10 bis 14, **dadurch gekennzeichnet, dass** die Formen (24a, 24b) der zweiten Bearbeitungsstationen (12) auf einer anderen Temperatur als die Formen der ersten Behandlungsstation (11) gehalten werden, insbesondere auf einer höheren Temperatur.

16. Verfahren nach einem der vorhergehenden Ansprüche 10 bis 15, **dadurch gekennzeichnet, dass** in die Formen (24a, 24b) der zweiten Bearbeitungsstationen (12) Handgriffe eingelegt werden und/oder die Formen (24a, 24b) der zweiten Bearbeitungsstationen (12) ausgeformt sind zur Bildung von Haltestrukturen für anbringbare Handgriffe in den darin ausgeformten Werkstücken.

17. Verfahren nach einem der vorhergehenden Ansprüche10 bis 16, **dadurch gekennzeichnet, dass** die Formen (24a, 24b) der ersten Bearbeitungsstationen (11) keine Konturen für Behälterfüße aufweisen und die Formen (24a, 24b) der zweiten Bearbeitungsstationen 12 Konturen für Behälterfüße aufweisen, insbesondere für einen Petaloid-Boden.

18. Verfahren nach einem der vorhergehenden Ansprüche10 bis 17, **dadurch gekennzeichnet, dass** die Formen (24a, 24b) der ersten Bearbeitungsstationen (11) glatte Formwände aufweisen ohne Konturen für Stabilisierungsrippen oder dekorative Behältermerkmale.

## Claims

1. A device (1) for manufacturing containers (8) from preforms (6) which pass through the device (1) in a conveying direction in the manufacturing operation of the device (1), wherein the device (1)
- comprises a first transfer wheel (2) with a plurality of handling devices (13) arranged in a circumferential manner for the pick-up, transport and delivery of workpieces (6, 7),
- a forming wheel (4), which is arranged in the conveying direction behind the first transfer wheel (2), and on which a plurality of first processing stations (11) and a plurality of second processing stations (12) are arranged in a circumferential distribution, each of which is suitably designed to accommodate workpieces (6, 7) and for machining the workpieces (6, 7), wherein the first and second processing stations (11, 12) are arranged alternately on the forming wheel (4),
- a second transfer wheel (3), which is arranged in the conveying direction behind the forming wheel (4), and which comprises a plurality of handling devices (14) for receiving, transporting and discharging workpieces (7, 8) leaving the forming wheel (4),
- a bypass means (5) which is arranged between the first and the second transfer wheel (2, 3) and comprises at least one handling device (15) for receiving, transporting and discharging workpieces (7) from the second transfer wheel (3) to the first transfer wheel (2);
- wherein the said forming and transfer wheels and the bypass means (2, 3, 4, 5) are designed to be driven in such a synchronized manner with each other, and the handling equipment (13, 14) and processing stations (11, 12) are arranged in such a circumferential distribution on the forming and transfer wheels and the bypass means (2, 3, 4, 5) that the first transfer wheel (2) transfers only workpieces (6) to the first forming stations (11), which do not pass from the bypass means (5) to the first transfer wheel (2), and it transfers workpieces (7) to the second forming stations (12) when the workpieces (7) pass from the bypass means (5) to the first transfer wheel (2),
- wherein the second transfer wheel (3) takes over workpieces (7, 8) from both the first and second processing stations (11, 12) and transfers only the workpieces (7) from the first processing station (11) to the bypass means (5),
- and wherein the bypass means (5) transports only workpieces (7) from the second to the first transfer wheel (3, 2) which have been removed from the first processing stations (11) by the second transfer wheel (3);
**characterized in that**
- the first and second processing stations (11, 12) are each designed as forming stations with multipart moulds (24a, 24b) which can be placed in an open and closed position relative to each other, wherein in the closed positioning an inner cavity is enclosed with a volume,
- wherein the forms of the first processing stations (11) differ from the forms of the second forming stations (12), namely that the forms of the second processing stations (12) enclose inner cavities with a volume V2 greater than the volume V1 of the inner cavities of the moulds of the first processing stations (11),
- wherein, preferably, at least the first processing stations (11), and furthermore preferably both the first (11) as well as the second processing stations (12) comprise horizontal bars (31)
- wherein the bypass means is also preferably designed as a bypass wheel (5), wherein a plurality of handling devices (15) are arranged in circumference on the bypass wheel (5).

2. The device according to Claim 1, **characterized in that** the handling devices (13, 14, 15) arranged on the first transfer wheel (2), the second transfer wheel (3) and/or the bypass means or bypass wheel (5) are designed as gripping mandrels or grippers.

3. The device according to any one of the preceding claims, **characterized in that** the first transfer wheel (2), the second transfer wheel (3), the forming wheel (4) and the bypass wheel (5) are continuously and synchronized with each other by rotational drives.

4. The device according to any one of the preceding claims, **characterized in that** the moulds (24a, 24b) of the first and/or second processing stations (11, 12) are designed to be interchangeable.

5. The device according to any one of the preceding claims, **characterized in that** the handling devices (13, 14, 15) of the first (2) and/or the second (3) and/or the bypass means, or bypass means (5) are designed to be interchangeable.

6. The device according to any one of the preceding claims, **characterized in that** the first transfer wheel (2) is synchronized with an input device (9) for transferring preforms (6) to the first transfer wheel (2) and/or the second transfer wheel (3) is synchronized with an output device (10) for removing workpieces (8) from the device.

7. The device according to any one of the preceding claims, **characterized in that** the moulds (24a, 24b) of the second processing stations (12) are kept at a different temperature than the moulds of the first treatment stations (11), in particular, at a higher temperature.

8. The device according to any one of the preceding claims, **characterized in that** handles are inserted into the moulds (24a, 24b) of the second processing stations (12) and/or the moulds (24a, 24b) are moulded for the formation of retaining structures for attachable handles in the workpieces formed therein.

9. The device according to any one of the preceding claims, **characterized in that** the moulds of the first processing stations (11) comprise no contours for container feet and the moulds (24a, 24b) of the second processing stations (12) have contours for container feet, in particular, for a petaloid base.

10. A method for the production of containers (8) from preforms (6) in a device (1) which is passed through in a conveying direction, wherein in the process workpieces (6, 7, 8) are transported by a first (2) and by a second transfer wheel (3) of the device (1), by a bypass means (5) of the device (1) and by a forming wheel (4) of the device (1),
- wherein a plurality of handling devices (13) for receiving, transporting and discharging workpieces (6, 7) are arranged in a circumferential manner on the first transfer wheel (2),
- wherein the forming wheel (4) is arranged in the conveying direction behind the first transfer wheel (2) and on the forming wheel (4) a plurality of first processing stations (11) and a plurality of second processing stations (12) are arranged in a circumferential manner, each of which is suitably designed to accommodate workpieces (6, 7) and for machining the workpieces (6, 7), wherein the first and second processing stations (11, 12) are arranged alternately on the forming wheel (4),
- wherein the second transfer wheel (3) is arranged in the conveying direction behind the forming wheel (4) and has a plurality of handling devices (14) for receiving, discharging and transporting workpieces (7, 8) leaving the forming wheel (4),
- wherein the bypass means (5) is arranged between the first and the second transfer wheel (2, 3) and at least one handling device (15) for receiving, transporting and discharging workpieces (7) from the second transfer wheel (3) to the first transfer wheel (2) is arranged on it,
- wherein the said forming and transfer wheels and the bypass means (2, 3, 4, 5) are driven in such a synchronized manner with each other, and the handling equipment (13, 14) and processing stations (11, 12) are distributed or distributed circumferentially on the forming and transfer wheels and the bypass means (2, 3, 4, 5) in such a way that the first transfer wheel (2) transfers only workpieces (6) to the first forming stations (11), which do not pass from the bypass means (5) to the first transfer wheel (2), and it transfers workpieces (7) to the second forming stations (12) when the workpieces (7) pass from the bypass means (5) to the first transfer wheel (2),
- wherein the second transfer wheel (3) takes over workpieces (7, 8) from both the first and second processing stations (11, 12) and transfers only the workpieces (7) from the first processing station (11) to the bypass means (5),
- and wherein the bypass means (5) transports only workpieces (7) from the second to the first transfer wheel (3, 2) which have been removed from the first processing stations (11) by the second transfer wheel (3);
**characterized in that**
- the first and second processing stations (11, 12) are each designed as forming stations with multipart moulds (24a, 24b) which can be positioned in an open and a closed position relative to each other, wherein, in the closed, positioning an inner cavity is enclosed with a volume,
- wherein the forms of the first processing stations (11) differ from the forms of the second forming stations (12), namely that the forms of the second processing stations (12) enclose inner cavities with a volume V2 greater than the volume V1 of the inner cavities of the moulds of the first processing stations (11),
- wherein, preferably, in the first processing stations, being furthermore preferred, in both the first as well as the second processing stations, stretching is carried out by a stretching bar,
- wherein the bypass means is further preferentially designed as a bypass wheel (5), wherein a plurality of handling devices (15) are further preferentially distributed on the bypass wheel (5).

11. The method according to Claim 10, **characterized in that** the handling devices (13, 14, 15) located on the first transfer wheel (2), the second transfer wheel (3) and/or the bypass means or bypass wheel (5) are designed as gripping mandrels or grippers.

12. The method according to any one of Claims 10 or 11, **characterized in that** the first transfer wheel (2), the second transfer wheel (3), the forming wheel (4) and the bypass wheel (5) rotate continuously and synchronously with each other.

13. The method according to any one of the preceding Claims 10 to 12, **characterized in that** the shapes (24a, 24b) of the first and/or second processing stations (11, 12) are interchangeable and/or the handling equipment (13, 14, 15) are interchangeable.

14. The method according to any one of the preceding Claims 10 to 13, **characterized in that** the first transfer wheel (2) is synchronized with an input device (9) for transferring preforms to the first transfer wheel (2) and/or the second transfer wheel (3) is synchronized with an output device (10) for removing workpieces.

15. The method according to any one of the preceding claims 10 to 14, **characterized in that** the moulds (24a, 24b) of the second processing stations (12) are kept at a different temperature from the moulds of the first treatment station (11), in particular, at a higher temperature.

16. The method according to any one of the preceding Claims 10 to 15, **characterized in that** handles are inserted into the moulds (24a, 24b) of the second processing stations (12) and/or the moulds (24a, 24b) of the second processing stations (12) are shaped for the formation of retaining structures for attachable handles in the workpieces formed therein.

17. The method according to any one of the preceding Claims 10 to 16, **characterized in that** the moulds (24a, 24b) of the first processing stations (11) comprise no contours for container feet and the shapes (24a, 24b) of the second processing stations have 12 contours for container feet, in particular for a petaloid base.

18. The method according to any one of the preceding Claims 10 to 17, **characterized in that** the moulds (24a, 24b) of the first processing stations (11) comprise smooth mould walls without contours for stabilizing ribs or decorative container features.

## Revendications

1. Dispositif (1) de fabrication de récipients (8) à partir de préformes (6) qui, lorsque le dispositif (1) est en cours de production, le parcourent dans un sens de transport, le dispositif (1) présentant
- une première roue de transfert (2) avec plusieurs dispositifs de manipulation (13) répartis sur sa périphérie pour recevoir, transporter et remettre des pièces à traiter (6, 7),
- une roue de formage (4) agencée derrière la première roue de transfert (2) dans le sens du transport et sur la périphérie de laquelle sont réparties plusieurs premières stations de traitement (11) et plusieurs deuxièmes stations de traitement (12), lesquelles sont respectivement conçues pour recevoir des pièces (6, 7) et pour traiter des pièces (6, 7), les premières et deuxièmes stations de traitement (11, 12) étant agencées en alternance sur la roue de formage (4),
- une deuxième roue de transfert (3) agencée derrière la roue de formage (4) dans le sens du transport et sur la périphérie de laquelle sont répartis plusieurs dispositifs de manipulation (14) pour recevoir, transporter et remettre les pièces (7, 8) qui quittent la roue de formage (4),
- un moyen de dérivation (5) agencé entre la première et la deuxième roue de transfert (2, 3) et au moins un dispositif de manipulation (15) pour recevoir, transporter et remettre des pièces (7) de la deuxième roue de transfert (3) à la première roue de transfert (2),
- les roues de formage et de transfert et le moyen de dérivation (2, 3, 4, 5) mentionnés étant conçus pour être entraînés avec une synchronisation réciproque telle et les dispositifs de manipulation (13,14) et stations de traitement (11,12) étant agencés avec une répartition périphérique sur les roues de formage et de transfert et le moyen de dérivation (2, 3, 4, 5) telle que la première roue de transfert (2) ne puisse remettre aux premières stations de formage (11) que des pièces (6) qui ne passent pas du moyen de dérivation (5) à la première roue de transfert (2) et qu'elle remette aux deuxièmes stations de formage (12) des pièces (7) lorsque ces pièces (7) passent du moyen de dérivation (5) à la première roue de transfert (2),
- la deuxième roue de transfert (3) prenant en charge des pièces (7, 8) provenant aussi bien des premières que des deuxièmes stations de traitement (11, 12) et ne remettant au moyen de dérivation (5) que les pièces (7) provenant des premières stations de traitement (11),
et le moyen de dérivation (5) ne transportant de la deuxième à la première roue de transfert (3, 2) que des pièces (7) reprises par la deuxième roue de transfert (3) à la sortie des premières stations de traitement (11),
**caractérisé en ce que**
- les premières et deuxièmes stations de traitement (11, 12) sont respectivement réalisées sous formes de stations de formage avec des moules (24a, 24b) constitués de plusieurs parties mobiles les unes par rapport aux autres pour pouvoir être placées en une position ouverte et en une position fermée, la position fermée enveloppant une cavité intérieure d'un certain volume,
- les moules des premières stations de traitement (11) étant différents des moules des deuxièmes stations de formage (12) dans la mesure où les moules des deuxièmes stations de traitement (12) renferment des cavités intérieures d'un Volume V2 supérieur au Volume V1 des cavités intérieures des moules des premières stations de traitement (11),
- les premières stations de traitement (11) au moins et, de préférence, les premières (11) et les deuxièmes stations de traitement (12) présentant de préférence des barres d'étirage (31),
- le moyen de dérivation étant de préférence réalisé sous forme de roue de dérivation (5), plusieurs dispositifs de manipulation (15) étant de préférence répartis sur la périphérie de la roue de dérivation (5).

2. Dispositif selon la revendication 1, **caractérisé en ce que** les dispositifs de manipulation (13, 14, 15) agencés sur la première roue de transfert (2), sur la deuxième roue de transfert (3) et/ou sur le moyen de dérivation ou à la roue de dérivation (5) sont réalisés sous forme de mandrins de préhension ou de pinces de préhension.

3. Dispositif selon l'une des revendications précédentes, **caractérisé en ce que** la première roue de transfert (2), la deuxième roue de transfert (3), la roue de formage (4) et la roue de dérivation (5) sont entraînées en rotations continuellement synchronisées entre elles.

4. Dispositif selon l'une des revendications précédentes, **caractérisé en ce que** les moules (24a, 24b) des premières et/ou des deuxièmes stations de traitement (11, 12) sont conçus pour être interchangeables.

5. Dispositif selon l'une des revendications précédentes, **caractérisé en ce que** les dispositifs de manipulation (13, 14, 15) de la première (2) et/ou de la deuxième (3) roue de transfert et/ou du moyen de dérivation ou de la roue de dérivation (5) sont conçus pour être interchangeables

6. Dispositif selon l'une des revendications précédentes, **caractérisé en ce que** la première roue de transfert (2) est reliée à un dispositif d'introduction (9) et synchronisée avec celui-ci pour la remise de préformes (6) à la première roue de transfert (2) et/ou la deuxième roue de transfert (3) est reliée à un dispositif de sortie (10) et synchronisée avec celui-ci pour retirer les pièces (8) du dispositif.

7. Dispositif selon l'une des revendications précédentes, **caractérisé en ce que** les moules (24a, 24b) des deuxièmes stations de traitement (12) sont maintenus à une température différente de cette des moules des premières stations de traitement (11), notamment à une température plus élevée.

8. Dispositif selon l'une des revendications précédentes, **caractérisé en ce que** des poignées sont insérées dans les moules (24a, 24b) des deuxièmes stations de traitement (12) et/ou les moules (24a, 24b) sont conformés de façon à former dans les pièces qui y sont moulées des structures de maintien pour des poignées.

9. Dispositif selon l'une des revendications précédentes, **caractérisé en ce que** les moules des premières stations de traitement (11) ne présentent pas de contours pour des pieds de récipient et les moules (24a, 24b) des deuxièmes stations de traitement (12) présentent des contours pour des pieds de récipient, notamment pour un fond pétaloïde.

10. Procédé de fabrication de récipients (8) à partir de préformes (6) dans un dispositif (1) parcouru selon un sens de transport, le procédé consistant à transporter des pièces à traiter (6, 7, 8) d'une première (2) et d'une deuxième roue de transfert (3) du dispositif (1), d'un moyen de dérivation (5) du dispositif (1) et d'une roue de formage (4) du dispositif (1),
- plusieurs dispositifs de manipulation (13) étant répartis sur la périphérie de la première roue de transfert (2) pour recevoir, transporter et remettre des pièces à traiter (6, 7),
- la roue de formage (4) étant agencée derrière la première roue de transfert (2) dans le sens du transport et plusieurs premières stations de traitement (11) et plusieurs deuxièmes stations de traitement (12) étant réparties sur la périphérie de la roue de formage (4) lesquelles stations sont respectivement conçues pour recevoir des pièces (6, 7) et pour traiter des pièces (6, 7), les premières et deuxièmes stations de traitement (11, 12) étant agencées en alternance sur la roue de formage (4),
- la deuxième roue de transfert (3) étant agencée derrière la roue de formage (4) dans le sens du transport et présentant, répartis sur sa périphérie, plusieurs dispositifs de manipulation (14) pour recevoir, transporter et remettre les pièces (7, 8) qui quittent la roue de formage (4),
- le moyen de dérivation (5) étant agencé entre la première et la deuxième roue de transfert (2, 3) et au moins un dispositif de manipulation (15) pour recevoir, transporter et remettre des pièces (7) de la deuxième roue de transfert (3) à la première roue de transfert (2) étant agencé sur le moyen de dérivation (5),
- les roues de formage et de transfert et le moyen de dérivation (2, 3, 4, 5) mentionnés étant entraînés avec une synchronisation réciproque telle et les dispositifs de manipulation (13,14) et stations de traitement (11,12) étant agencés avec une répartition périphérique ou périphériquement répartis sur les roues de formage et de transfert et le moyen de dérivation (2, 3, 4, 5) de façon telle que la première roue de transfert (2) ne puisse remettre aux premières stations de formage (11) que des pièces (6) qui ne passent pas du moyen de dérivation (5) à la première roue de transfert (2) et qu'elle remette aux deuxièmes stations de formage (12) des pièces (7) lorsque ces pièces (7) passent du moyen de dérivation (5) à la première roue de transfert (2),
- la deuxième roue de transfert (3) prenant en charge des pièces (7, 8) provenant aussi bien des premières que des deuxièmes stations de traitement (11, 12) et ne remettant au moyen de dérivation (5) que les pièces (7) provenant de la première station de traitement (11),
- et le moyen de dérivation (5) ne transportant de la deuxième à la première roue de transfert (3, 2) que des pièces (7) reprises par la deuxième roue de transfert (3) à la sortie des premières stations de traitement (11),
**caractérisé en ce que**
- les premières et deuxièmes stations de traitement (11, 12) sont respectivement réalisées sous formes de stations de formage avec des moules (24a, 24b) constitués de plusieurs parties mobiles les unes par rapport aux autres pour pouvoir être placées en une position ouverte et en une position fermée, la position fermée enveloppant une cavité intérieure d'un certain volume,
- les moules des premières stations de traitement (11) étant différents des moules des deuxièmes stations de formage (12) dans la mesure où les moules des deuxièmes stations de traitement (12) renferment des cavités intérieures d'un Volume V2 supérieur au Volume V1 des cavités intérieures des moules des premières stations de traitement (11),
- un étirage au moyen d'une barre d'étirage ayant de préférence lieu dans les premières stations de traitement (11) et, également de préférence, dans les premières (11) et les deuxièmes stations de traitement (12),
- le moyen de dérivation étant de préférence réalisé sous forme de roue de dérivation (5), plusieurs dispositifs de manipulation (15) étant de préférence répartis sur la périphérie de la roue de dérivation (5).

11. Procédé selon la revendication 10, **caractérisé en ce que** les dispositifs de manipulation (13, 14, 15) agencés sur la première roue de transfert (2), sur la deuxième roue de transfert (3) et/ou sur le moyen de dérivation ou à la roue de dérivation (5) sont réalisés sous forme de mandrins de préhension ou de pinces de préhension.

12. Procédé selon l'une des revendications 10 ou 11, **caractérisé en ce que** la première roue de transfert (2), la deuxième roue de transfert (3), la roue de formage (4) et la roue de dérivation (5) sont en rotation continuellement synchronisée entre elles.

13. Procédé selon l'une des revendications précédentes 10 à 12, **caractérisé en ce que** les moules (24a, 24b) des premières et/ou des deuxièmes stations de traitement (11, 12) sont interchangeables et/ou **en ce que** les dispositifs de manipulation (13, 14, 15) sont interchangeables.

14. Procédé selon l'une des revendications précédentes 10 à 13, **caractérisé en ce que** la première roue de transfert (2) est reliée à un dispositif d'introduction (9) et synchronisée avec celui-ci pour la remise de préformes à la première roue de transfert (2) et/ou la deuxième roue de transfert (3) est reliée à un dispositif de sortie (10) et synchronisée avec celui-ci pour retirer des pièces.

15. Procédé selon l'une des revendications précédentes 10 à 14, **caractérisé en ce que** les moules (24a, 24b) des deuxièmes stations de traitement (12) sont maintenus à une température différente de cette des moules des premières stations de traitement (11), notamment à une température plus élevée.

16. Procédé selon l'une des revendications précédentes 10 à 15, **caractérisé en ce que** des poignées sont insérées dans les moules (24a, 24b) des deuxièmes stations de traitement (12) et/ou les moules (24a, 24b) des deuxièmes stations de traitement (12) sont conformés de façon à former dans les pièces qui y sont moulées des structures de maintien pour des poignées.

17. Procédé selon l'une des revendications précédentes 10 à 16, **caractérisé en ce que** les moules (24a, 24b) des premières stations de traitement (11) ne présentent pas de contours pour des pieds de récipient et les moules (24a, 24b) des deuxièmes stations de traitement (12) présentent des contours pour des pieds de récipient, notamment pour un fond pétaloïde.

18. Procédé selon l'une des revendications précédentes 10 à 17, **caractérisé en ce que** les moules (24a, 24b) des premières stations de traitement (11) présentent des parois lisses sans contours pour nervures de stabilisation ou caractéristiques décoratives.
